Europäisches Patentamt

European Patent Office

Office européen des brevets

Publication number: **0 286 238**

**A1**

# EUROPEAN PATENT APPLICATION

Application number: 88302011.7

Int. Cl.⁴ **A61C 17/00 , F25B 9/02**

Date of filing: 08.03.88

The title of the invention has been amended (Guidelines for Examination in the EPO, A-III, 7.3).

Priority: 11.03.87 US 24572

Date of publication of application:
12.10.88 Bulletin 88/41

Designated Contracting States:
DE FR GB IT

Applicant: A-DEC, INC.
P.O. Box 111
Newberg Oregon 97132(US)

Inventor: Black, John V.
3012 Bob Ben Court
Augusta, Georgia 30906(US)
Inventor: Sturges, Paul D.
1906 Birch Lane
Newberg, Oregon 97132(US)

Representative: Meddle, Alan Leonard et al
FORRESTER & BOEHMERT
Widenmayerstrasse 4/I
D-8000 München 22(DE)

## Dental warm air blower.

A dental apparatus is provided which includes a handle (12) having a hollow interior and an end portion (14) which is slightly curved to facilitate insertion in the oral cavity of a dental patient. Within the hollow interior, an air heater system is provided consisting of an air vortex tube (50). Air is delivered to one end (70) of the vortex tube in a direction perpendicular to the longitudinal axis of the tube causing the air to rapidly spin within the tube. The spinning air contacts a deflection member (80) at the opposite end of the tube which causes a portion of the air to deflect rearward toward its point of entry. This air is cool in temperature, and expelled from the rear of the tube. The non-deflected air is warm and directed out of the curved end portion of the handle. The invention further includes an adjustment system (56, 80, 96) to control the temperature of air leaving the vortex tube.

FIG. 3

## DENTAL APPARATUS

The present invention generally relates to a dental apparatus for delivering heated air to the oral cavity of a patient, and more particularly to a dental dryer having a self-contained, non-electrical system for internally generating and delivering heated air.

In most dental procedures, it is necessary to remove moisture from the tooth or regions of the mouth being treated. For example, when filling a decayed tooth, moisture must be removed from the tooth after drilling is completed and prior to the application of filling material. The failure to remove such moisture can result in an unstable, improperly constructed filling.

To accomplish the removal of moisture, dentists have applied heated air to the regions of the mouth being treated. This heated air is usually provided by instruments having air blower units. These instruments are often large, cumbersome, and require complex electrical heating systems.

For example, U.S. Patent No. 2,420,338 to Page discloses a dental apparatus having a heated air blower. Pressurized air is supplied to the apparatus from an air source, and is delivered through an applicator. To heat the air, a complex system of electrical resistive heating elements is used.

Likewise, U.S. Patent No. 4,026,025 to Hunt discloses a dental instrument for delivering pressurized water, air, or both to the oral cavity of a dental patient. The air is again heated using an electrical heating element.

The present invention represents a substantial departure from these and other dental instruments having air delivery systems. It is lightweight, easy to operate, and includes its own non-electrical, self-contained air heating system. These and other novel features of the invention will be described more fully below.

It is an object of the present invention to provide a dental apparatus with a heated air delivery system which is lightweight in construction, manufactured from inexpensive materials, and easy to operate.

It is another object of the present invention to provide a dental apparatus with a heated air delivery system which uses a minimal number of working components.

It is another object of the present invention to provide a dental apparatus with a heated air delivery system which is small and easily inserted within the oral cavity of a dental patient.

It is a still further object of the present invention to provide a dental apparatus with a heated air delivery system which is capable of delivering a constant and controlled supply of heated air to the oral cavity of a dental patient.

It is an even further object of the present invention to provide a dental apparatus with a heated air delivery system which incorporates an internal non-electric air heating system.

To accomplish these objectives, a dental apparatus with a heated air delivery system is provided which includes a handle having a hollow interior and an end portion which is slightly curved to facilitate insertion in the oral cavity of a dental patient. Within the hollow interior, a non-electrical air heating system is provided consisting of an air vortex tube. Air at ambient temperature is delivered to one end of the vortex tube at a direction perpendicular to the longitudinal axis of the tube. As a result, the air begins to rapidly spin and move down the tube. The spinning air contacts a deflection member in the opposite end of the tube which causes a portion of the air to deflect back toward its original point of entry. This air is cool, and expelled from the rear of the apparatus. The non-deflected air is warm and passes out of the vortex tube through the curved end of the handle for application within the oral cavity of a dental patient.

The invention as described herein further includes an adjustment system to control the temperature of air leaving the vortex tube. As a result, air at a selectively warm temperature can be applied where needed in a fast and efficient manner while avoiding the use of complicated and expensive heating equipment.

These and other objects, features, and advantages of the invention will become apparent from the following drawings and detailed description of a preferred embodiment.

In the Accompanying Drawings

Fig. 1 is a perspective view of a dental dryer constructed in accordance with the invention.

Fig. 2 is an exploded perspective view of the dryer of Fig. 1.

Fig. 3 is an enlarged, fragmentary cross sectional view of the dryer of Fig. 1.

Fig. 4 is a reduced scale partial cross sectional view showing the vortex tube assembly and other components within the outer sheath of the dryer.

Fig. 5 is a partial cross sectional view showing the arrangement of the deflection member in the vortex tube of the dryer.

Fig. 6 is a sectional view taken along lines 6-6 of Fig. 1.

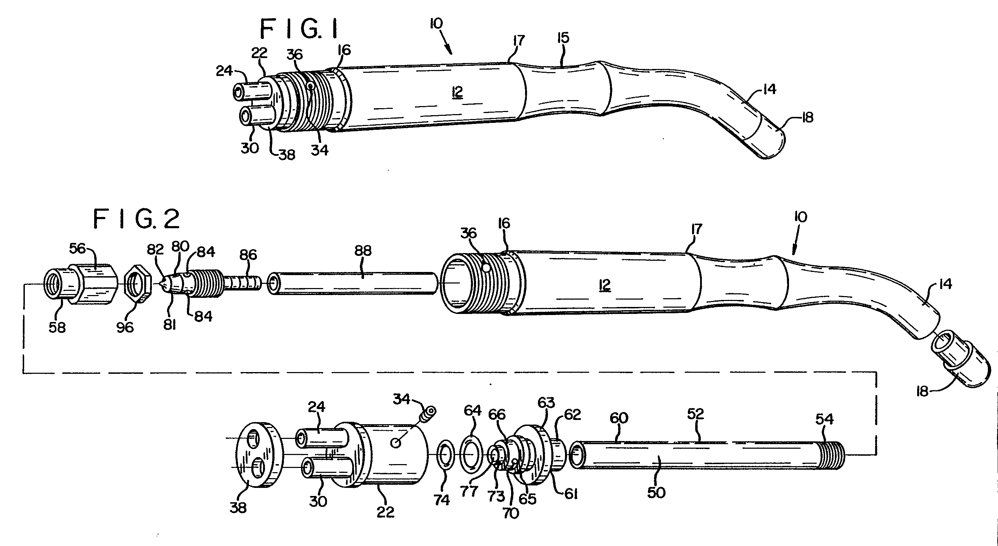

The present invention represents an improved dental dryer for the delivery of heated air into the oral cavity of a dental patient. With reference to Figs. 1, 2, and 4, the invention 10 includes a hollow handle 12 having a first or nozzle end 14, second or coupling end 16, and a medial portion 17. The handle 12 is preferably manufactured of aluminum or other metal capable of thermal sterilization and resistance to chemical agents normally encountered in dentistry.

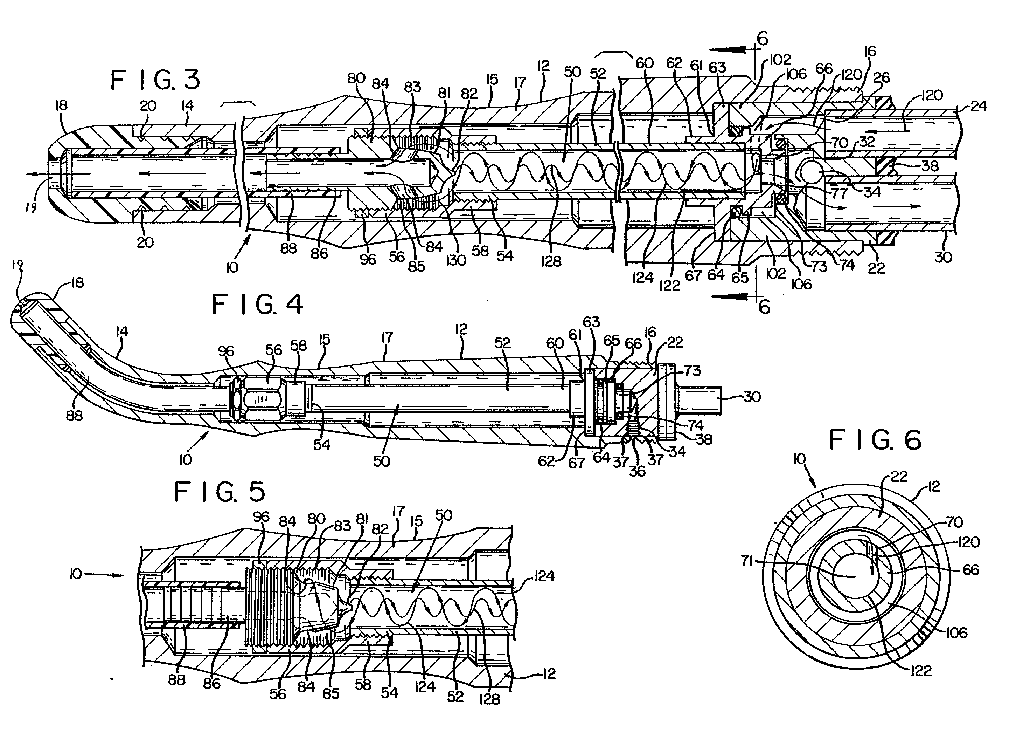

The handle 12 becomes generally narrower in diameter from coupling end 16 to the nozzle end 14 as illustrated in Figs. 1 and 4. The medial portion 17 includes a concave gripping region 15 which has a smooth surface to facilitate the cleaning and sterilization thereof. In addition, the nozzle end 14 is curved to facilitate its insertion into the mouth of a patient. The coupling end 16 is externally threaded for attachment to a standard four hole dental connector well known in the art, which includes air supply tubing and air exhaust tubing.

Secured to the nozzle end 14 is a rigid outlet tip 18 with a terminal opening 19. The tip 18 has a smooth surface to ensure safe insertion into a patient's mouth, and is preferably manufactured of a plastic material such as fluorocarbon plastic which is heat and chemical resistant. As shown in Figs. 3 and 4, the tip 18 is permanently bonded within the nozzle end 14 so that it will not fall out during use. To accomplish this, the tip 18 is glued into the nozzle end 14 using an adhesive material after both components have been thoroughly degreased. A preferred adhesive material is sold under the trademark Loctite 640 which is applied to both parts and subsequently cured for approximately 10 minutes at 200-250°F (approx. 93-121°C).

To ensure proper adhesion between the tip 18 and nozzle end 14, the tip 18 includes a plurality of 60° V-grooves 20 which provide a reservoir for the adhesive material.

Seated in the coupling end 16 of the handle 12 is a cylindrical endpiece 22 shown in Figs. 1-4. Attached to the endpiece 22 is an air intake conduit 24 which communicates with a bore 26 in endpiece 22 as illustrated in Fig. 3. Adjacent to and parallel with the air intake conduit 24 is an air exit conduit 30 which communicates with a central bore 32 in endpiece 22. also illustrated in Fig. 3. Both the air intake conduit 24 and air exit conduit 30 are secured to the endpiece 22 using a suitable adhesive such as Loctite 640.

The cylindrical endpiece 22 is maintained in position by a set screw 34 threaded radially into the endpiece 22. Access to the set screw 34 is provided through an opening 36 in the handle 12. The diameter of the set screw 34 is slightly larger than the diameter of the opening 36. After insertion of the endpiece 22 in the coupling end 16 with the set screw 34 fully withdrawn, a tool is inserted through opening 36 and set screw 34 is backed out so that it firmly engages the inside wall 37 of the handle 12 adjacent opening 36 (Fig. 4).

As previously noted, the coupling end 16 and conduits 24, 30 are adapted for attachment to a standard four hole dental connector well-known in the art (not shown). Secure and airtight attachment of the conduits 24, 30 to the aforesaid connector is facilitated through the use of a resilient elastomer gasket 38 shown in Figs. 1-4.

Mounted in the medial portion 17 of the handle 12 is a vortex tube assembly 50 (Figs. 2-4). Vortex tubes have been previously known and used in applications outside the dental field, primarily as a source of refrigerated air.

The vortex tube assembly 50 includes a tubular central conduit 52 having an externally threaded first end 54 threaded into the end 58 of a coupling member or adaptor 56 which is internally threaded (Figs. 3 and 5). As illustrated in Fig. 4, the adaptor 56 is hexagonally shaped to minimize the contact and thermal conduction between the adaptor 56 and handle 12. The central conduit 52 also includes a second end 60 fitted to a vortex chamber element 61 designed for attachment.to the endpiece 22. The element 61 is circular in cross section, and includes a connecting portion 62 which receives the central conduit 52 (Fig. 3). Adjacent the connecting portion 62 is an annular retaining flange 63 which abuts a step 67 formed on the inner periphery of the handle 12. Spaced longitudinally from the flange 63 is a rib 65 for maintaining in position an O-ring 64 which is used to form a seal between the endpiece 22 and the vortex chamber element 61. Adjacent rib 65 is an annular end portion 66 having an air inlet passageway 70 extending therethrough in a direction perpendicular to and laterally offset from the longitudinal axis 71 of the handle 12 (Fig. 6).

The vortex chamber element 61 further includes a terminal portion 73 having an O-ring 74. The O-rings 64, 74 ensure an airtight seal between the vortex chamber element 61 and endpiece 22. Extending through the terminal portion 73 is an air outlet passageway 77 in communication with the central conduit 52 of the vortex tube assembly 50 and the bore 32 of the endpiece 22.

Threaded into the adaptor 56 of the vortex tube assembly 50 is a deflection member 80 having a substantially conical deflecting head with a concave surface of revolution 82 as shown in Fig. 5. Downstream of the surface 82, the deflection member 80 is provided with an outwardly inclined frusto conical surface 81 which is spaced from the inner wall 83 of the adaptor 56. A pair of exit ports 84 extend through the deflection member 80 into the hollow interior thereof as illustrated in Figs. 3 and 5. Attached to the end portion 86 of the deflection member 80 is a tube 88 which is preferably manufactured of Teflon(R) or other material capable of resisting heat and chemical deterioration. The tube 88 extends into and through the nozzle end 14 so as to provide a means for conducting heated air to the opening 19 in tip 18.

A lock nut 96 is threaded onto the deflection member 80 and tightened against the adaptor 56 to lock the deflection member 80 in position.

To assemble the invention 10, the vortex tube assembly 50 and attached deflection member 80 are inserted into the handle 12 until the annular retaining flange 63 engages the step 67 formed in the handle 12 (Fig. 3). Next, the endpiece 22 and associated components are inserted into the coupling end 16 of the handle 12. Upon insertion, the set screw 34 is tightened against the interior wall 37 of the handle 12 as described above. The O-rings 64, 74 are compressed between the vortex chamber element 61 and the endpiece 22 as indicated in Fig. 3 so as to provide an airtight seal therebetween. This completes the assembly of the invention 10.

Once assembled, the end portions 102 of the endpiece 22 abut the annular retaining flange 63 as shown in Fig. 3. In this configuration, an air flow zone 106 is formed between the annular end portion 66 and the endpiece 22 (Figs. 3 and 6). This enables air to flow from air intake conduit 24 through bore 26 into zone 106. Once in zone 106, the air enters air inlet passageway 70 and flows into the interior of the vortex tube assembly 50. This aspect of the invention 10 and its other functional features will be further explained in the following section entitled "Operation".

The conduits 24, 30 of the endpiece 22 are first attached to the standard four hole dental connector unit described above. Air at ambient temperature and a pressure of between 40-80 psi (approx.276-552kN/m²) is introduced through air intake conduit 24. With reference to Fig. 3, the air flows through bore 26 in the endpiece 22 into zone 106 and through air inlet passageway 70 of the annular end portion 66. Air movement as described above is schematically illustrated in Figs. 3 and 6 by arrows 120.

As shown in Fig. 6, the air moves down through air inlet passageway 70 in a direction perpendicular to the longitudinal axis 71 of the handle 12. After leaving passageway 70, the air strikes the interior surface 122 of the central conduit 52 of the vortex tube assembly 50 and begins to spin as a result of entering tangentially to the bore of conduit 52, as represented by arrows 124 in Figs. 3 and 5. As the air spins, it expands and approaches sonic velocity. The velocity of spinning is such as to leave a low pressure zone or vacuum at the center of the conduit 52. The air continues to spin through the vortex tube assembly 50, and a portion thereof escapes through the gap 85 formed between the surface 81 of the deflection member 80 and the adaptor 56. The remaining air is deflected by the concave surface 82 into a smaller diameter vortex, illustrated by arrows 128 in Figs. 3 and 5, and flows rearwardly through the low pressure zone toward the second end 60 of the central conduit 52 of the vortex tube assembly 50. This rearwardly flowing air undergoes loss of energy as its direction is reversed and its temperature decreases. The rearwardly flowing air then passes through air outlet passageway 77, bore 32, and out of the handle 12 through air exit conduit 30. Meanwhile, the air escaping through gap 85 passes next through air exit ports 84 as illustrated by arrows 130 in Fig. 3. This air is heated and flows through end portion 86, tube 88, and out of the handle 12 through tip 18.

The aerodynamic principles behind the above-described generation of hot and cold air fractions are not precisely known. It is theorized that when the portion of air illustrated by arrows 128 strikes the deflection member 80 and reverses direction, its linear velocity is reduced. Since kinetic energy is proportional to the square of linear velocity in a vortex tube system, kinetic energy will be lost by such air and transferred in the form of heat to the air passing over deflection member 80 and out of the invention 10.

Considerable air temperatures can be achieved using the present invention. For example, ambient air entering at a temperature of 70°F (approx. 21°C) and pressure of 80 psi (approx. 552kN/m²) can be heated to a temperature as high as 160°F (approx 71°C).

The invention further includes means to control the temperature of the air leaving the tip 18. First, such temperature is proportional to the air inlet temperature and pressure. Increases in air inlet temperature and/or pressure will result in the production of warmer air. In the alternative, air temperature can be controlled by selective inward/outward adjustment of the deflection member 80 with respect to the central conduit 52 of the vortex tube assembly 50. By loosening lock nut 96 and rotating deflection member 80 outward, colder air will be produced. The opposite effect is obtained when deflection member 80 is rotated inward.

Having described herein a preferred embodiment of the present invention, it will be appreciated that suitable variations thereof may be made by those of ordinary skill in the art. Thus, it is intended that the scope of the present invention be construed according to the following claims.

The features disclosed in the foregoing description in the following claims and/or in the accompanying drawings may, both separately and in any combination thereof, be material for realising the invention in diverse forms thereof.

## Claims

1. A dental apparatus for the generation and delivery of heated air to the oral cavity of a dental patient comprising:

a handle having a first end, second end, and hollow medial portion therebetween;

inlet means in said second end for directing air from an external air source into said medial portion of said handle;

air vortex generator means within said medial portion of said handle for receiving said air from said inlet means and generating a heated air fraction and cooled air fraction therefrom;

first outlet means in said first end of said handle for receiving said heated air fraction from said vortex generator means and delivering said heated air fraction out of said handle to said oral cavity of said dental patient; and

second outlet means in said second end of said handle adjacent said inlet means for directing said cooled air fraction out of said handle.

2. The dental apparatus of claim 1 further comprising temperature control means for regulating the temperature of said heated air fraction.

3. The dental apparatus of claim 1 wherein said inlet means comprises an air intake conduit secured to an endpiece, said air intake conduit communicating with a first bore through said endpiece for directing air inwardly toward said vortex generator means, said endpiece being attached to said second end of said handle.

4. The dental apparatus of claim 3 wherein said vortex generator means comprises an air conduit having a first threaded end, and a second end comprising an air inlet passageway for receiving air from said first bore in said endpiece, said air inlet passageway extending through said second end in a direction perpendicular to the longitudinal axis of said handle.

5. The dental apparatus of claim 4 wherein said second end of said vortex generator means further comprises an air outlet passageway extending therethrough in a direction perpendicular to that of said air inlet passageway.

6. The dental apparatus of claim 5 wherein said second end of said vortex generator means further comprises retaining means for maintaining said vortex generator means in position within said medial portion of said handle, and sealing means for maintaining an airtight relationship between said second end of said vortex generator means and said endpiece.

7. The dental apparatus of claim 5 wherein said second outlet means in said second end of said handle comprises an air exit conduit secured to said endpiece adjacent to and parallel with said air intake conduit, said air exit conduit communicating with a second bore in said endpiece, said second bore communicating with said air outlet passageway in said second end of said vortex generator means.

8. The dental apparatus of claim 1 wherein said first end of said handle is curved so as to facilitate insertion thereof into the oral cavity of a dental patient.

9. The dental apparatus of claim 8 wherein said first end of said handle comprises a rigid plastic tip secured thereto.

10. The dental apparatus of claim 4 wherein said vortex generator means further comprises a deflecting member at said first threaded end thereof for deflecting a portion of air within said vortex generator means toward said second end thereof, said portion representing said cooled air fraction, said deflecting member further comprising at least one opening therethrough through which the portion of air not deflected by said deflecting member can pass, said air representing said heated air fraction.

11. The dental apparatus of claim 10 wherein said deflecting member is threadably engageable with said first threaded end of said vortex generator means so as to permit the movement of said deflecting member inward and outward relative to said air conduit of said vortex generator means to control the temperature of said heated air fraction, said outward movement of said deflecting member decreasing the temperature of said fraction, and said inward movement of said deflecting member increasing the temperature of said fraction.

12. The dental apparatus of claim 11 further comprising locking means for maintaining said deflecting member in a selected position relative to said air conduit of said vortex generator means.

13. A dental apparatus for the generation and delivery of heated air to the oral cavity of a dental patient comprising:

a handle having a first end, second end, and hollow medial portion therebetween;

inlet means at said second end for directing air from an external air source into said medial portion of said handle, said inlet means comprising an air intake conduit secured to an endpiece, said intake conduit communicating with a first bore through said endpiece, said endpiece being attached to said second end of said handle;

air vortex generator means within said medial portion of said handle for receiving said air from said inlet means and generating a heated air fraction and cooled air fraction therefrom;

first outlet means at said first end of said handle for receiving said heated air fraction from said vortex generator means and delivering said heated air fraction out of said handle to said oral cavity of said dental patient; and

second outlet means in said second end of said handle for directing said cooled air fraction out of said handle, said second outlet means comprising an air exit conduit secured to said endpiece adjacent to and parallel with said air intake conduit, said air exit conduit communicating with a second bore in said endpiece, said second bore communicating with said vortex generator means.

14. The dental apparatus of claim 13 further comprising temperature control means for regulating the temperature of said heated air fraction.

15. The dental apparatus of claim 13 wherein said vortex generator means comprises an air conduit having a first threaded end, and a second end comprising an air inlet passageway for receiving air from said first bore in said endpiece, said air inlet passageway extending through said second end in a direction perpendicular to the longitudinal axis of said handle.

16. The dental apparatus of claim 15 wherein said second end of said vortex generator means further comprises an air outlet passageway extending therethrough in a direction perpendicular to that of said air inlet passageway in said second end, said air outlet passageway communicating with second bore in said endpiece.

17. The dental apparatus of claim 16 wherein said second end of said vortex generator means further comprises retaining means for maintaining said vortex generator means in position within said medial portion of said handle, and sealing means for maintaining an airtight relationship between said second end of said vortex generator means and said endpiece.

18. The dental apparatus of claim 13 wherein said first end of said handle is curved so as to facilitate insertion thereof into the oral cavity of a dental patient.

19. The dental apparatus of claim 18 wherein said first end of said handle comprises a rigid plastic tip secured thereto.

20. The dental apparatus of claim 15 wherein said vortex generator means further comprises a deflecting member at said first threaded end thereof for deflecting a portion of air within said vortex generator means toward said second end thereof, said portion representing said cooled air fraction, said deflecting member further comprising at least one opening therethrough through which the portion of air not deflected by said deflecting member can pass, said air representing said heated air fraction.

21. The dental apparatus of claim 20 wherein said deflecting member is threadably engageable with said first threaded end of said vortex generator means so as to permit the movement of said deflecting member inward and outward relative to said air conduit of said vortex generator means to control the temperature of said heated air fraction, said outward movement of said deflecting member decreasing the temperature of said fraction, and said inward movement of said deflecting member increasing the temperature of said fraction.

22. A dental apparatus for the generation and delivery of heated air to the oral cavity of a dental patient comprising:

a handle having a first end, a second end, and a hollow medial portion therebetween, said first end being curved so as to facilitate insertion thereof into the oral cavity of a dental patient;

inlet means at said second end for directing air from an external air source into said medial portion of said handle, said inlet means comprising an air intake conduit secured to an endpiece, said intake conduit communicating with a first bore through said endpiece for directing air into the medial portion of said handle, said endpiece being attached to said second end of said handle;

air vortex generator means within said medial portion of said handle for receiving said air from said inlet means and generating a heated air fraction and cooled air fraction therefrom, said vortex generator means comprising an air conduit having a first threaded end, and a second end comprising an air inlet passageway for receiving air from said first bore in said endpiece, said air inlet passageway extending through said second end in a direction perpendicular to the longitudinal axis of said handle, said second end of said vortex generator means further comprising an air outlet passageway extending therethrough in a direction perpendicular to that of said air inlet passageway in said second end;

first outlet means at said first end of said handle for receiving said heated air fraction from said vortex generator means and delivering said heated air fraction out of said handle to said oral cavity of said dental patient;

second outlet means in said second end of said handle for directing said cooled air fraction out of said handle, said second outlet means comprising an air exit conduit secured to said endpiece adjacent to and parallel with said air intake conduit, said air exit conduit communicating with a second bore in said endpiece, said second bore communicating with said air outlet passageway in said second end of said vortex generator means; and

means within said vortex generator means for generating said heated air fraction and said cooled air fraction comprising a deflecting member at said first threaded end thereof for deflecting a portion of air within said vortex generator means toward said second end thereof, said portion representing said cooled air fraction, said deflecting member further comprising at least one opening therethrough through which said portion of air not deflected by said deflecting member can pass, said air representing said heated air fraction, said deflecting member being threadably engageable with said first threaded end of said vortex generator means so as to permit the movement of said deflecting member inward and outward relative to said air conduit of said vortex generator means to control the temperature of said heated air fraction, said outward movement of said deflecting member decreasing the temperature of said fraction, and said inward movement of said deflecting member increasing the temperature of said fraction.

FIG.1

FIG.2

0 286 238

FIG. 3

FIG. 4

FIG. 5

FIG. 6

0 286 238

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 531 913 (TAGUCHI)<br>* Whole document * | 1,3-8, 10,13, 15-18, 20 | A 61 C 17/00<br>F 25 B 9/02 |
| Y | | 2,9,11, 12,14, 19,21, 22 | |
| Y | US-A-3 074 243 (TILDEN)<br>* Column 4, lines 7-21; figure 2 * | 2,11,12 ,14,21, 22 | |
| Y | US-A-3 391 696 (WOODWARD)<br>* Column 3, lines 23-25 * | 9,19 | |

**TECHNICAL FIELDS SEARCHED (Int. Cl.4)**

A 61 C
F 25 B

The present search report has been drawn up for all claims

| Place of search | Date of completion of the search | Examiner |
|---|---|---|
| THE HAGUE | 09-06-1988 | CLARKSON P.M. |